# EUROPÄISCHE PATENTSCHRIFT

(11) **EP 2 356 705 B1**
(45) Veröffentlichungstag und Bekanntmachung des Hinweises auf die Patenterteilung: **10.07.2013**
(21) Anmeldenummer: 09801915.1
(22) Anmeldetag: 04.11.2009
(51) Int. Cl.: H02N 2/02

(54) **ELEKTRISCHER PIEZOMOTOR-UNIVERSALANTRIEB**
ELECTRIC PIEZO MOTOR UNIVERSAL DRIVE
ENTRAÎNEMENT UNIVERSEL ÉLECTRIQUE DE PIÉZOMOTEUR

(30) Priorität: 10.11.2008 DE 102008056570; 02.12.2008 DE 102008059890
(43) Veröffentlichungstag der Anmeldung: 17.08.2011
(73) Patentinhaber: Richter, Berta, 86163 Augsburg (DE)
(72) Erfinder: RICHTER, Hans, 86163 Augsburg (DE)
(74) Vertreter: Gallo, Wolfgang
(86) Internationale Anmeldenummer: PCT/DE2009/001536
(87) Internationale Veröffentlichungsnummer: WO 2010/051797

(56) Entgegenhaltungen:
- WO-A1-2007/068441
- US-A1- 2005 006 981

## Beschreibung

Die Erfindung betrifft einen insbesondere auf einem Piezomotor basierenden elektrischen Universalantrieb, der insbesondere als Fahrzeugantrieb vorgesehen ist, aber auch für vielfältige andere Antriebsaufgaben einsetzbar ist Er wird im folgenden als Piezomotor-Universalantrieb beschrieben. Jedoch können die Piezoaktoren durch gleich oder ähnlich wirkende und hochfrequent betreibbare andersartige Aktoren ersetzt werden.

Als Fahrzeugantrieb, insbesondere von Kraftfahrzeugen, kann der erfindungsgemäße Antrieb auf eine mit einer Radachse gekuppelte Scheibe als Antriebselement wirken. Dabei kann bei einem Kraftfahrzeug eine Bremsscheibe als mit dem erfindungsgemäßen Antrieb zusammenwirkende Scheibe vorgesehen sein, die dann sowohl als Antriebsscheibe wie auch als Bremsscheibe wirkt.

Aus der WO 2007/068 441 A1 ist ein piezoelektrischer Motor zur Verwendung als Fahrzeugantrieb, Stellantrieb und dgl. bekannt. Dieser weist zwei spiegelbildlich auf beiden Seiten einer Antriebs- oder Bremsscheibe angeordnete Motoranordnungen auf, die jeweils zwischen einem Bezugsteil, nämlich Rahmen oder Gehäuse, und der Antriebs- oder Bremsscheibe als Abtriebsteil angeordnete, wechselweise elektrisch beaufschlagte Klemmpiezopakete und zwei jedem Klemmpiezopaket zugeordnete, gegensinnig angeordnete Schrittpiezopakete auf, die mit in Längsrichtung des Klemmpiezopakets voneinander und vom Abtriebsteil beabstandeten Stellen mit einem quasi-gelenkig mit dem Klemmpiezopaket verbundenen Fuß verbunden sind, der auf das Abtriebsteil wirkt.

Die Klemmpiezopakete dienen jeweils zum selektiven Erzeugen einer Klemmkraft zwischen Bezugsteil und Abtriebsteil, weshalb sie als Klemmpiezopakete bezeichnet werden. Diese Klemmpiezopakete sind jeweils mit einem Ende der Piezoelementenstapelanordnung am Bezugsteil festgelegt und stützen sich mit dem anderen Ende über den Fuß auf dem Abtriebsteil ab, ohne daran festgelegt zu sein. Die Klemmpiezopakete sind jeweils in Reihen nebeneinander angeordnet, wobei die Orientierung der Reihe quer zur Richtung der Relativbewegung zwischen Abtriebsteil und Bezugsteil verläuft.

Dabei hat jede der beiden spiegelbildlich angeordneten Antriebsanordnungen zwei Gruppen von Klemmpiezopaketen und zwei Gruppen von Schrittpiezopaketen. Diese werden elektrisch so angesteuert, dass jeweils die eine Gruppe von Klemmpiezopaketen aktiviert, d.h. im Sinne einer Expansion elektrisch beaufschlagt wird, und diese Klemmpiezopakete sich über den damit verbundenen Fuß klemmend an das Abtriebsteil anlegen, während die andere Gruppe von Klemmpiezopaketen deaktiviert, also in Lösestellung und nicht mit dem Abtriebsteil klemmend, geschaltet ist. Dann wird die der klemmend geschalteten Klemmpiezopaketgruppe zugeordnete Gruppe von Schrittpiezopaketen aktiviert, so dass die betreffenden Schrittpiezopakete sich dehnen und dadurch die auf dem Abtriebsteil klemmenden Füße der Klemmpiezopakete um eine entsprechende Distanz in Bewegungsrichtung des Abtriebsteils auslenken. Dadurch bewegt sich das Abtriebsteil um eine entsprechende Distanz unter den in Lösestellung geschalteten Klemmpiezopaketen der anderen Klemmpiezopaketgruppe hinweg. Danach wird die Ansteuerung umgeschaltet, d.h. die zuvor klemmenden Klemmpiezopakete werden in Lösestellung geschaltet, ebenso die zugehörigen Schrittpiezopakete, so dass die zuvor klemmenden Klemmpiezopakete sich aus der Klemmstellung lösen und in ihre Ausgangslage zurückkehren, während gleichzeitig die andere Gruppe von Klemmpiezopaketen, die vorher in der Lösestellung waren, durch Aktivierung in die klemmende Position geschaltet und danach auch deren Schrittpiezopakete aktiviert werden. Auf diese Weise erzeugen die beiden Gruppen von Klemmpiezopaketen mit den jeweils zugeordneten Schrittpiezopaketen durch ihren alternierenden Einsatz eine fortlaufende Schrittfolge, wodurch das Abtriebsteil schrittweise bewegt wird. Da diese Ansteuerung der Piezopakete im Frequenzbereich von einigen Kilohertz, z.B. 25 kHz, erfolgt, erhält man eine quasi-kontinuierliche Bewegung des Abtriebsteils relativ zum Bezugsteil.

Damit das Zusammenwirken zwischen den Klemmpiezopaketen und dem Abtriebsteil funktioniert, müssen die Klemmpiezopakete zwischen dem Bezugsteil und dem Abtriebsteil unter straffer Vorspannung gehalten werden, da sonst bei dem verfügbaren Dehnungshub der Klemmpiezopakete die geforderte Klemmkraft und somit die notwendige Reibkraft zum Bewegen des Abtriebsteils nicht erreicht werden könnte.

Bereits aus der WO 03/005 553 ist bekannt, dass dazu die in einer Reihe angeordneten Klemmpiezopakete jeweils über eine diese miteinander verbindenden sogenannten "halbsteifen Brücke" unter Vorspannung am Bezugsteil abgestützt sind. Vorausgesetzt ist dabei, dass das Abtriebsteil steif ist. Bei der "halbsteifen Brücke" bedeutet der Begriff "halbsteif", dass die Brücke sich mindestens im Längentoleranz- und Dehnungshubbereich der Klemmpiezopakete im statischen Zustand Stapelhöhendifferenzen der Klemmpiezopakete biegeelastisch anpasst, im dynamischen Zustand bei der Betriebsfrequenz sich jedoch im wesentlichen starr verhält. Dem liegt die Erkenntnis zugrunde, dass die Bewegungen der Piezopakete sehr klein sind. Der verfügbare Dehnungsweg eines Piezopakets beträgt etwa ein Tausendstel der Stapelhöhe.

Bei dem piezoelektrischen Motor nach der WO 2007/068 441 A1 ist zur Verbesserung des Prinzips der "halbsteifen Brücke" vorgeschlagen, diese in Gestalt separater, reibschlüssig zusammengespannter Brückenelemente, die jeweils einem Klemmpiezopaket zugeordnet sind, weiter zu bilden. Dort ist auch vorgesehen, dass durch Wahl der Geometrie der Anordnung der Schrittpiezopakete, nämlich der relativen Positionierung der gegensinnig angeordneten Schrittpiezopakete, ein dem Anwendungszweck optimal angepasstes "Übersetzungsverhältnis" zwischen Schrittpiezoauslenkung und Fußauslenkung an dessen Angriffsstelle am Abtriebsteil eingestellt werden kann. Dadurch können bei.entsprechender Arbeitsfrequenz der Piezopakete bei einer Verwendung als Kraftfahrzeugantrieb mit direkter Übertragung auf die Radachse beispielsweise über eine auch als Antriebsscheibe dienende Bremsscheibe Geschwindigkeiten von deutlicher über 200 km/h erreicht werden. Außerdem kann durch Phasenverschiebung der Ansteuerung der gegenläufigen Schrittpiezopakete eine Geschwindigkeitssteuerung auf einfache Weise realisiert werden.

Aufgabe der vorliegenden Erfindung ist es, unter Verwendung eines piezoelektrischen Motors nach dem aus der WO 2007/068 441 A1 bekannten Bauprinzip eine komplette, beispielsweise als Kraftfahrzeugantrieb verwendbare Antriebsanordnung zu schaffen, die über die spezifischen Anforderungen für den Piezomotor auch die übrigen Gegebenheiten insbesondere beim Betrieb eines Kraftfahrzeugs berücksichtigt.

Wie oben in Bezug auf den aus der WO 2007/068 441 A1 bekannten Piezomotor erläutert, kommt es für dessen Funktion auf eine straffe Vorspannung zwischen dem Abtriebsteil und den Klemmpiezopaketen an. Während des "Schreitvorgangs" der Füße der Klemmpiezopakete zum Antrieb der als Abtriebsglied dienenden Scheibe sind die nicht aktiven Klemmpiezopaketfüße nur minimal, nämlich einige hundertstel Millimeter, vom Abtriebsglied abgehoben.

Der Piezomotor kann nicht nur als Motor zum Antrieb der Abtriebsscheibe arbeiten, sondern kann auch zum Bremsen benutzt werden, indem er von der Abtriebsscheibe angetrieben wird und dabei als elektrischer Generator wirkt und dabei der Drehung der Abtriebsscheibe einen Widerstand entgegensetzt. Zum Bremsen eines Kraftfahrzeugs ist es aber notwendig, zusätzliche Reibbremsbacken vorzusehen, um eine starke Bremsung vornehmen zu können.

Bei Hybridantrieben von Kraftfahrzeugen mit wahlweise einsetzbarem Brennkraftmotor und Elektromotor ist es bei Verwendung eines Piezomotors als Elektromotor auch erforderlich, den Piezomotor von der Antriebsscheibe freizuschalten, wenn das Fahrzeug mit dem Brennkraftmotor gefahren werden soll. Das heißt, dass dann die Füße der Klemmpiezopakete alle entgegen der sonst für den Betrieb notwendigen straffen Vorspannung von der Antriebsscheibe abgehoben sein müssen. Eine diese Funktion erfüllende Freischaltvorrichtung ist auch schon in der oben erörterten WO 2007/068 441 A1 vorgeschlagen, wobei aber auch diesbezüglich eine Verbesserung hinsichtlich minimalster Störanfälligkeit und Leichtgängigkeit wünschenswert ist.

Ein Ziel der Weiterbildung des Piezomotors zu einem Komplettantrieb besteht darin, alle diese notwendigen Funktionen, die beispielsweise für einen Kraftfahrzeugantrieb erforderlich sind, in den Komplettantrieb zu integrieren, der dann auch die Funktion der Bremse übernehmen kann.

Wünschenswert ist ein als Kraftfahrzeugantrieb einsetzbarer Antrieb auf Piezomotorbasis vor allen Dingen auch deswegen, weil damit eine interessante Alternative zu bisher üblichen Elektroantrieben von Kraftfahrzeugen, gerade auch in der Gestalt von Hybridantrieben, geschaffen wird. Kennzeichen bisheriger elektrischer Kraftfahrzeugantriebe ist die Notwendigkeit des Einsatzes hochwirksamer Magnetbauteile aus Seltenerdmagneten, wofür aber die globalen Ressourcen sehr begrenzt sind, und die auch bei einem robusten Einsatz in Kraftfahrzeugantrieben der Gefahr von Korrosion ausgesetzt sind, wofür sie empfindlich sind. Auch die notwendigen großen Kupferanteile von Elektromotoren sind problematisch.

Die oben erläuterte Aufgabe wird gemäß der Erfindung durch die im Anspruch 1 angegebene Anordnung gelöst. Vorteilhafte Weiterbildungen und Ausgestaltungen der Erfindung sind Gegenstand der Unteransprüche.

Die Erfindung umfasst eine besonders ausgebildete Kombination eines Federmechanismus mit einem Kniehebelmechanismus, um das Vorspannen der Klemmpiezopakete oder anderer Aktoren mit ihren Füßen gegen die Antriebsscheibe und deren Abheben zum Freischalten schnell und unkompliziert zu ermöglichen, sowie um wahlweise eine zusätzliche Reibungsbremse schnell und kraftvoll zum Einsatz bringen zu können.

Wie schon eingangs gesagt, ist der erfindungsgemäße Antrieb insbesondere auf Piezoaktoren basierend aufgebaut. Abweichend davon können aber anstelle von Piezoaktoren, also der Klemmpiezopakete und der Schrittpiezopakete, auch andere Aktoren wie magnetinduktive oder magnetorestriktive Aktoren eingesetzt werden, die hochfrequent betreibbar sind und ähnliche Eigenschaften hinsichtlich der Erzeugung einer hochfrequenten Schrittfolge von sich auf einem Abtriebsglied abstützenden Füßen haben.

Es versteht sich auch, daß das Abtriebsglied nicht auf eine Scheibe beschränkt ist, insbesondere nicht auf eine drehende Scheibe, sondern irgendein drehend oder linear bewegbares Abtriebsglied sein kann, wie beispielsweise eine Platte, ein Zylinder, eine Gewindespindel oder ein anderes Bauteil.

Wenngleich der erfindungsgemäße Universalantrieb insbesondere als Automobil- oder Fahrzeugantrieb, auch als Komponente von Hybridantrieben, vorgesehen ist, ist er universell einsetzbar, beispielsweise zum Antrieb von Industrierobotern, Werkzeugmaschinen, oder Stell- und Spannvorrichtungen. Auch der Einsatz als antimagnetischer Antrieb in der Medizintechnik oder als eisenfreier Antrieb beispielsweise in Spintomographen ist denkbar.

Der erfindungsgemäße Antrieb kann auch umgekehrt betrieben werden und als elektrischer Generator arbeiten. Hier ist beispielsweise der Einsatz als Windradgenerator oder als Stromerzeugungsmaschine denkbar. Aber insbesondere ist auch der Betrieb als Generator zur Rückgewinnung von Bremsenergie bei motorischen Antrieben vorgesehen.

Einzelheiten der erfindungsgemäßen Konstruktion sowie deren Aufbau und Wirkungsweise werden in der nachfolgenden Beschreibung eines Ausführungsbeispiels unter Bezugnahme auf die anliegenden schematischen Zeichnungen dargestellt.

In den Zeichnungen zeigt:
- Fig. 1: eine radial zur Abtriebsscheibe (Bremsscheibe) gesehene Ansicht eines Piezomotor-Komplettantriebs nach der Erfindung,
- Fig. 2: eine vergrößerte schematische Detailansicht in Richtung des Pfeils II in Fig. 1,
- Fig. 3: eine vergrößerte Darstellung des Kniehebelmechanismus der Anordnung nach Fig. 1,
- Fig. 4: einen vergrößerten, in Richtung des Pfeils IV in Fig. 1 gesehenen Schnitt durch eine die Piezopaketgruppenträger zusammenspannenden Spannmechanismus, und
- Fig. 5: eine vergrößerte Detailansicht einer Vorrichtung zur Einstellung der Piezopaketvorstellung.

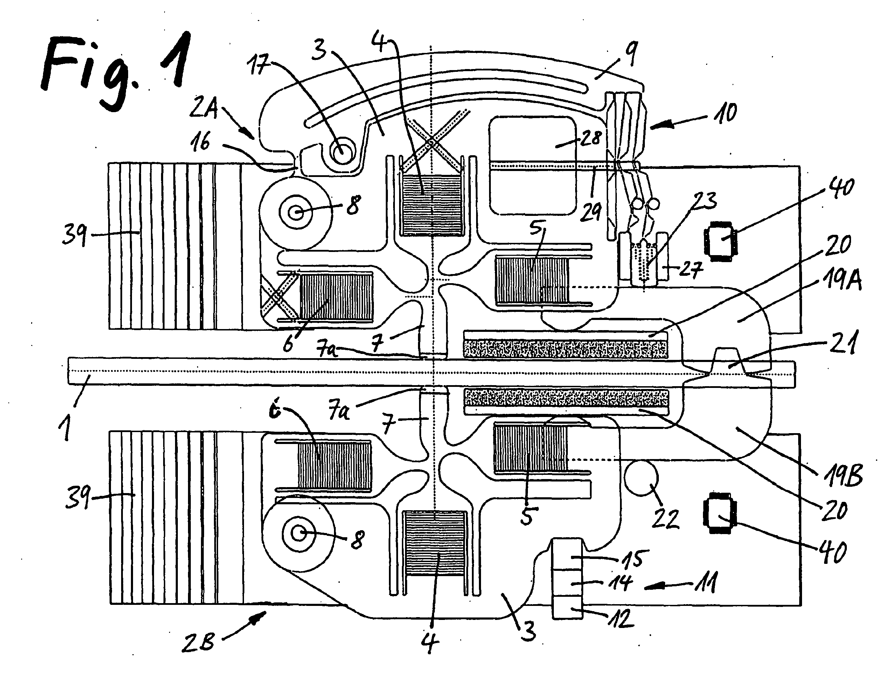

Fig. 1 zeigt eine schematische Ansicht des erfindungsgemäßen Piezomotor-Komplettantriebs in Radialrichtung zur Abtriebsscheibe/Bremsscheibe gesehen.

Eine sowohl als Antriebsscheibe als auch als Bremsscheibe dienende und somit das Abtriebsglied des Piezomotors darstellende Scheibe 1 ist in üblicher Weise auf einer Radachse montiert. Diese Scheibe 1 wird in einem Umfangsbereich von einer spiegelbildlichen Piezomotor-Anordnung umgriffen, die einen auf der einen Seite der Scheibe angeordneten Piezomotorblock 2A und einen spiegelbildlich dazu auf der anderen Seite der Scheibe 1 angeordneten Piezomotorblock 2B aufweist.

Jeder der beiden Piezomotorblöcke 2A und 2B ist prinzipiell in der aus der WO 2007/068 441 A1 bekannten Weise aufgebaut.

Jeder Piezomotorblock 2A/2B besteht aus mehreren, in Radialrichtung zur Scheibe 1 nebeneinander angeordneten Piezopaketsätzen, die jeweils einen Piezopaketträger 3, ein daran angeordnetes Klemmpiezopaket 4, und zwei ebenfalls daran angeordnete Schrittpiezopakete 5, 6 aufweist. Das Klemmpiezopaket 4 ist senkrecht zur Oberfläche der Scheibe 1 orientiert und stützt sich mit seinem von der Scheibe 1 abgewandten Ende am Piezopaketträger 3 ab und ist an seinem der Scheibe 1 zugewandten Ende mit einem Fuß 7 verbunden, der sich auf der Scheibe 1 abstützt, und der an seinem der Scheibe 1 zugewandten Ende vorzugsweise mit einem Hartmetallbelag 7a bestückt ist. Die beiden Schrittpiezopakete 5, 6 sind gegensinnig zueinander und jeweils parallel zur Oberfläche der Scheibe 1 orientiert angeordnet, und sie sind in Längsrichtung des Klemmpiezopakets 4 um eine gewisse Distanz versetzt angeordnet und greifen jeweils über einen Stempel an dem Fuß 7 an und sind mit ihrem jeweils entgegengesetzten Ende am Piezopaket-Träger 3 abgestützt. Die Distanz zwischen dem auf der Scheibe 1 abgestützten Ende des Fußes 7 und der Verbindungsstelle mit dem der Scheibe 1 näher gelegenen Schrittpiezopaket 6 ist um ein Mehrfaches größer als die Distanz zwischen den Verbindungsstellen der beiden Schrittpiezopakete 5, 6 mit dem Fuß 7. Der Fuß 7 weist zwischen den Verbindungsstellen mit den beiden Schrittpiezopaketen 5, 6 und zwischen der Verbindungsstelle mit dem von der Scheibe 1 weiter entfernten Schrittpiezopaket 5 und dem Klemmpiezopaket 4 jeweils ein Quasi-Gelenk auf, also eine Materialverdünnung, die aufgrund der Materialelastizität als Gelenk wirken kann.

Abweichend vom Ausführungsbeispiel können in jedem Piezopaketsatz auch beide Schrittpiezopakete auf der gleichen Seite des Klemmpiezopakets angeordnet sein. Eine solche Anordnung baut kompakter, hat allerdings den Nachteil, daß nur geringere Hubübersetzungen am Fuß 7 erreichbar sind.

Es sind in jedem Piezomotorblock 2A, 2B zwei Gruppen von Piezopaketsätzen vorhanden, die wechselweise in der eingangs schon unter Bezugnahme auf den aus der WO 2007/068 441 A1 bekannten Piezomotor erläuterten Weise angesteuert werden, so dass die Füße 7 jeweils einer Gruppe in Kontakt mit der Scheibe 1 eine Schreitbewegung, und die Füße 7 der anderen Gruppe von der Scheibe 1 abgehoben eine Rückstellbewegung ausführen. Die Geometrie der Anordnung ermöglicht dabei eine Übersetzung des Schritthubs der Schrittpiezopakete 5, 6, so dass das sich auf der Scheibe 1 abstützende Ende des Fußes 7 jeweils eine mehrfach größere Schrittbewegung ausführt.

Aus Gründen der Vereinfachung und der besseren Verständlichkeit der Zeichnung ist in Fig. 1 der Stator, also das die Piezomotorblöcke und die sonstigen Bauteile aufnehmende Gehäuse, nicht dargestellt. Dargestellt sind lediglich die gehäusefesten Elemente, an denen die Piezomotorblöcke und weitere Komponenten abgestützt sind.

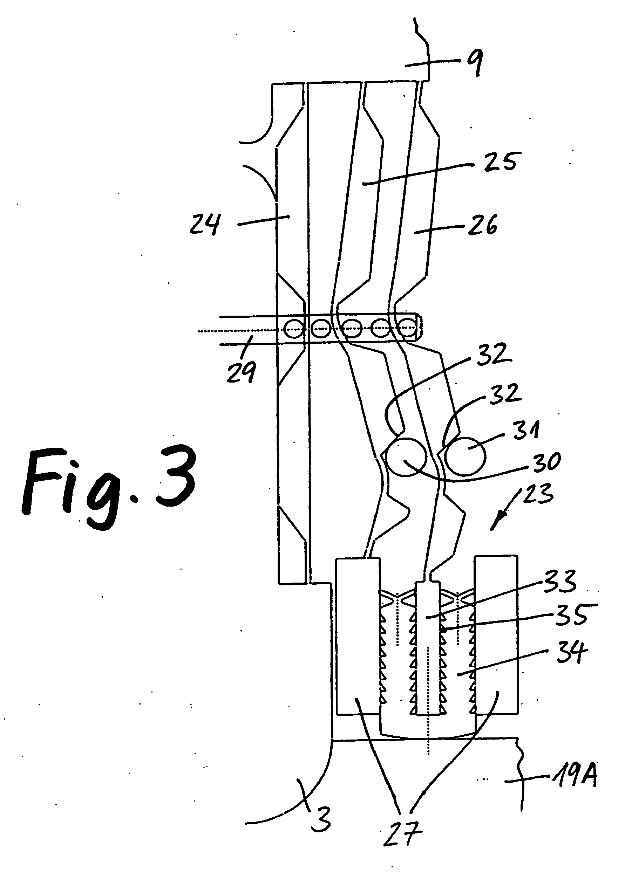

Die Piezopaketträger 3 aller (jeweils senkrecht zur Zeichenebene der Fig. 1 hintereinander angeordneten) Piezopaketsätze sind durch einen gehäusefesten Bolzen 8 miteinander verbunden. Die Piezopaketträger 3 sind schwenkbar auf diesem Bolzen 8 angeordnet, sind aber auf dem Bolzen durch einen Spannmechanismus miteinander verspannt, der nachstehend noch unter Bezugnahme auf Fig. 3 der Zeichnungen erläutert wird.

Die Vorspannkraft für die Klemmpiezopakete beider Piezomotorblöcke 2A/2B zum Anpressen des jeweiligen Fußes 7 an die Scheibe 1 wird durch eine Kragfeder-Kniehebelmechanismus-Anordnung erzeugt, die pro Piezopaketträger 3 eine Kragfeder 9 und einen Kniehebelmechanismus 10 aufweist. Diese Anordung aus Kragfeder 9 und Kniehebelmechanismus 10 wirkt nur auf den jeweiligen Piezopaketträger 3 des einen Piezomotorblocks 2A unmittelbar, während der andere Piezomotorblock 2B über eine Abstützvorrichtung 11 an einem gehäusefesten Abstützteil 12 abgestützt ist.

Wie man aus Fig. 1 erkennt, ist die Geometrie der Motorblockanordnungen so gewählt, dass die Füße 7 jedes Piezomotorblocks 2A/2B ebenso wie das jeweilige Klemmpiezopaket 4 etwa in der Mitte des Piezomotorblocks befindet, während der Bolzen 8, um den die Piezopaketträger 3 schwenken können, davon in Umfangsrichtung der Scheibe 1 um eine erhebliche Distanz versetzt ist. Das Andrücken des Fußes 7 an die Scheibe 1 bzw. das Abheben des Fußes 7 von der Scheibe 1 erfolgt also durch (wenn auch äußerst geringfügige) Verschwenkung des jeweiligen Piezopaketträgers 3 um den Bolzen 8.

Die Abstützung der Piezopaketträger 3 des Piezomotorblocks 2B über die Abstützvorrichtung 11 am gehäusefesten Abstützteil 12 erfolgt an einer Stelle, die von den Füßen 7 in bezüglich des Bolzens 8 entgegengesetzter Richtung wiederum um eine beträchtliche Distanz versetzt ist.

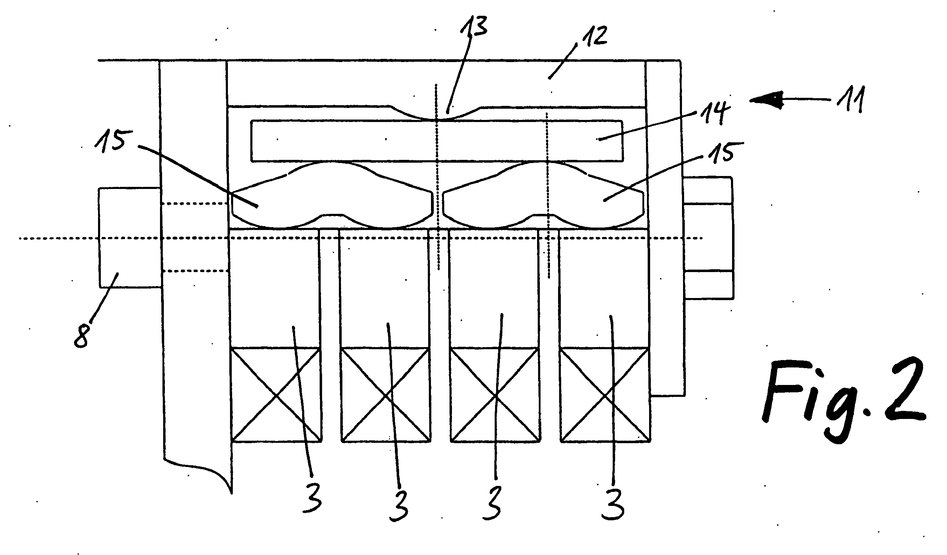

Die Abstützvorrichtung ist in Fig. 2 in vergrößerter schematischer Darstellung gezeigt. Man erkennt dort die in Radialrichtung der Scheibe 1, also senkrecht zur Zeichenebene in Fig. 1, nebeneinander angeordneten vier Piezopaketsätze mit den jeweiligen Piezopaketträgem 3. Man erkennt auch im Hintergrund den Bolzen 8. Die Abstützvorrichtung 11 stützt die vier Piezopaketträger 3 so an dem gehäusefesten Abstützteil 12 ab, dass ein Toleranzausgleich zum Ausgleich etwaiger toleranzbedingter Unterschiede der Ausdehnung der Piezopaketsätze senkrecht zur Scheibe 1 ermöglicht werden. Dazu ist am gehäusefesten Abstützteil 12, und zwar an einem mittigen gewölbten Noppen 13, eine Wippplatte 14 abgestützt, an der sich wiederum zwei Wippkörper 15 abstützen, an denen jeweils zwei benachbarte der insgesamt vier Piezopaketträger 3 abgestützt sind.

Die Kragfeder-Kipphebelmechanismus-Anordnung wirkt auf den Piezomotorblock 2A und ermöglicht dessen schaltbares Anpressen oder Freischalten mit Bezug auf die Scheibe 1 und auch relativ zum anderen Piezomotorblock 2B, so dass wegen der Abstützung des anderen Piezomotorblocks 2B am Gehäuse ein Anpressen oder Freischalten des Piezomotorblocks 2A jeweils auch das Anpressen bzw. Freischalten des anderen Piezomotorblocks 2B mit Bezug auf die dazwischen verlaufende Scheibe 1 bewirkt.

Die Kragfederanordnung besteht aus jeweils einer jedem Piezopaketträger 3 zugeordneten Kragfeder 9, die über einem etwa senkrecht zur Scheibe 1 verlaufenden Steg 16 einstückig mit dem Piezopaketträger 3 verbunden ist. Der Steg 13 ist in seiner Geometrie so ausgebildet, dass er zum einen als Abstützung der Kragfeder 9 dienen kann, aber auch als Quasi-Gelenk für eine geringfügige Schwenkbewegung der Kragfeder 9 um diesen Steg 16 in Richtung zur Scheibe 1 hin bzw. von dieser weg.

Um eine gewisse Distanz in Richtung parallel zur Scheibe 1 von der Position des Bolzens 8 in Richtung zur Position des Fußes 7 des jeweiligen Piezopaketträgers 3 ist ein mit dem Gehäuse verbundener Exzenter 17 angeordnet, der auf die jeweilige Kragfeder 9 wirkt, um diese in Richtung zur Scheibe 1 hin vorzuspannen. Mit der in der Kragfeder 9 gespeicherten Vorspannung presst diese dann über den Kniehebelmechanismus 10 den jeweiligen Piezopaketträger 3 in Richtung der Scheibe 1.

Abweichend vom Ausführungsbeispiel könnte die Kragfeder 9 mit ihrem vom Kniehebelmechanismus 10 abgewandten Ende auch Gehäusefest festgelegt sein. Statt der Vorspannung durch einen Exzenter könnte auch ein hydraulischer oder anderer Druckzylinder als Vorspannquelle benutzt werden. Die Kragfeder könnte sogar insgesamt durch eine anderweitige ähnlich wirkende Vorsprungsquelle ersetzt sein.

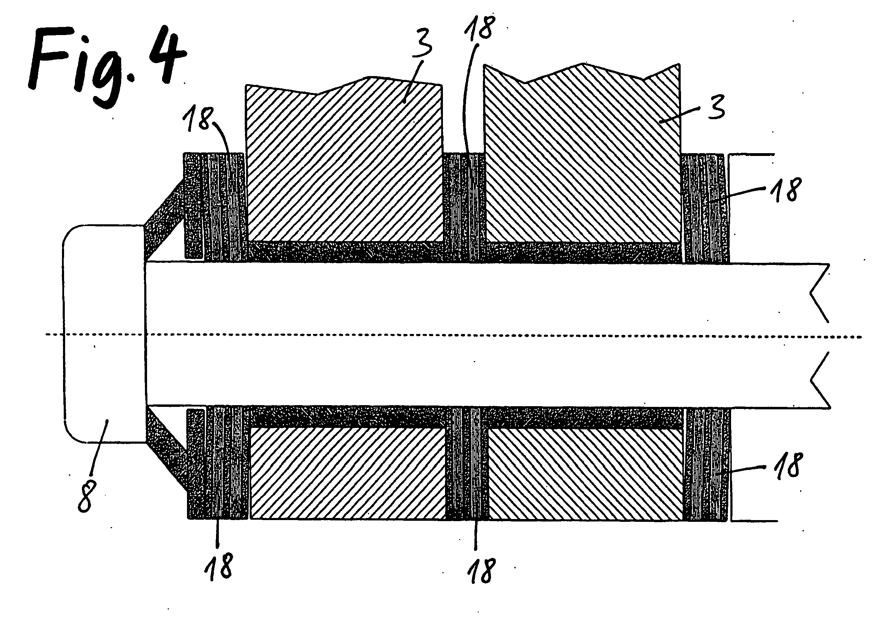

Fig. 4 zeigt in vergrößertem Schnitt den Spannmechanismus zum gegenseitigen Vorspannen der nebeneinander auf dem Bolzen 8 angeordneten Piezopaketträger 3 eines Piezomotorblocks. Während bei dem eingangs erläuterten Stand der Technik nach der WO 2007/068 441 A1 eine fixe Verspannung der Piezopaketträger und damit eine fixe Charakteristik der sogenannten "halbsteifen Brücke" (die hierdurch gebildet ist) vorgesehen ist, ist bei der erfindungsgemäßen Anordnung die Verspannung der Piezopaketträger 3 auf dem Bolzen 8 steuerbar. Der Klarheit halber sind nur zwei der vier nebeneinander angeordneten Piezopaketträger 3 im Schnitt wesentlich vergrößert dargestellt. Zwischen den benachbarten Piezopaketträgern 3 und auch den gehäusefesten Anschlägen an den axialen Enden sind ringplattenförmige, nach Art von Tellerfedern wirkende Piezoelemente 18 eingesetzt. Diese bestehen jeweils aus einer Piezoschicht auf einer Stahlblechscheibe und haben Reibungsbeläge an ihren den Piezopaketträgern zugewandten Seiten. Je nach elektrischer Ansteuerung dieser Piezoelemente 18 verändern diese ihre Konfiguration zwischen einer ebenen und einer leicht kegeligen Konfiguration, wodurch die Vorspannung verändert wird. Diese Piezoelemente 18 stellen damit gewissermaßen steuerbare Tellerfedern dar.

Alle Piezopakete besitzen Kraftsensoren (nicht dargestellt), deren Signale einer Steuerelektronik zugeführt werden, welche ihrerseits die Piezoelemente 18 ansteuert und damit die Verspannung der Piezopaketträger 3 im Zusammenspiel mit den Piezokräften optimal steuert.

Der Piezomotor-Komplettantrieb nach Fig. 1 weist außerdem eine Backenbremse auf, die zwei beiderseits der Scheibe 1 angeordnete Bremsklauen19A und 19B und Bremsbacken 20 aufweisen. Die beiden Bremsklauen 19A/19B sind durch ein Kippgelenk 21 miteinander verbunden.

Die Bremsklaue 19A stützt sich an einem gehäusefesten Widerlager 22 ab, während auf die Bremsklaue 19B ein über den Kniehebelmechanismus 10 betätigbarer Stempel 23 wirkt Es versteht sich, dass die Bremsklauen 19A/19B in ihre Lösestellung vorgespannt sind, was aber nicht eigens dargestellt ist.

Nunmehr wird unter Bezugnahme auf Fig. 3 der Kniehebelmechanismus 10 mehr im einzelnen beschrieben, der eine dreifache Aufgabe hat, nämlich zum einen das Übertragen der Vorspannung von der Kragfederanordnung auf die Piezomotorblöcke 2A/2B, zum zweiten das Freischalten des Piezomotors von der Scheibe 1, und zum dritten die Betätigung des auf die Bremsklauen wirkenden Stempels 23.

Der Kniehebelmechanismus umfasst einen ersten Kniehebel 24, einen zweiten Kniehebel 25, und einen dritten Kniehebel 26.

Der erste Kniehebel 24 stützt sich einerseits an der Kragfeder 9 ab und wirkt andererseits auf den jeweiligen Piezopaketträger 3. Der zweite Kniehebel 25 ist zwischen der Kragfeder 9 und einem gehäusefesten Gegenlager 27 angeordnet. Der dritte Kniehebel 26 ist zwischen der Kragfeder 9 und dem Stempel 23 angeordnet.

Zur Betätigung des Kniehebelmechanismus 10 dient ein Betätigungsaktor 28 (siehe Figur 1), der über ein Kuppelglied 29 mit den Kniegelenken aller drei Kniehebel 24, 25 und 26 verbunden ist, so daß jeweils alle drei Kniehebel gleichzeitig betätigt werden.

Die Anordnung ist so getroffen, daß, wenn der Piezomotor arbeitet, also die Piezopaketträger 3 gegen die Scheibe 1 vorgespannt sein müssen, der erste Kniehebel 24 gestreckt ist, während gleichzeitig der zweite Kniehebel 25 und der dritte Kniehebel 26 eingeknickt sind. Ebenso ist aufgrund der Kupplung der Kniegelenke aller drei Kniehebel der erste Kniehebel 24 eingeknickt, wenn der zweite und dritte Kniehebel 25, 26 gestreckt werden.

Zum Freischalten bewegt der Betätigungsaktor 28 das Kuppelglied 29 in Figur 3 nach rechts, so daß der erste Kniehebel 24 eingeknickt und gleichzeitig der zweite und dritte Kniehebel gestreckt werden. Wie man sieht, sind der zweite und der dritte Kniehebel 25, 26 jeweils dreigliedrig ausgebildet und haben jeweils ein zweites Kniegelenk, das sich jeweils an einem gehäusefestem Anschlag 30 bzw. 31 abstützt. Diese dreigliedrige Ausbildung des zweiten und des dritten Kniehebels 25, 26 vergrößert die Streckung bei gering bleibender Auslenkung des jeweils ersten, mit dem Kuppelglied 29 verbundenen Kniegelenks.

Die Geometrie des zweiten und dritten Kniehebels 25, 26 ist so getroffen, daß der dritte Kniehebel 26 beim Strecken eine größere Längung erfährt als der zweite Kniehebel 25.

Bewegt also der Betätigungsaktor 28 das Kuppelglied 29 in Figur 3 nach rechts, erfolgt zum einen das Einknicken des ersten Kniehebels 24 und zum anderen gleichzeitig ein Strecken des zweiten und des dritten Kniehebels 25, 26. Durch die Streckung des zweiten Kniehebels 25, der sich auf einem gehäusefesten Gegenlager 27 abstützt, wird der Piezopaketträger 3 von der Scheibe 1 weggeschwenkt, so daß der Fuß 7 von der Scheibe abhebt, und damit der Piezomotor freigeschaltet ist. Bei weiterer Bewegung des Kuppelglieds nach rechts in Figur 2 wird der dritte Kniehebel 26 soweit gestreckt, daß er wegen seiner gegenüber der Längung des zweiten Kniehebels 25 größeren Längung den Stempel 23 in Richtung zur Scheibe 1 hinbewegt und dadurch die Bremsklaue 19A unmittelbar und die Bremsklaue 19B mittelbar betätigt.

Wie man aus Figur 3 auch sieht, hat beim zweiten und dritten Kniehebel 25, 26 das jeweils zwischen den beiden Kniegelenken verlaufende Kniehebelglied eine mit dem zugeordneten gehäusefesten Anschlag 30 bzw. 31 zusammen wirkende Schrägfläche 32, die mit dem gehäusefesten Anschlag 30, 31 nach Art eines Keilgetriebes zusammenwirkt, wodurch die Streckung beschleunigt und unterstützt wird.

Da zur Betätigung des Kniehebelmechanismus 10 nur ein minimaler Weg erforderlich ist und eine Kniehebelstreckung immer gleichzeitig einer anderen Kniehebeleinknickung erfolgt, ist auch die Betätigungskraft jeweils klein, so daß eine bisher nicht bekannte hochfrequente Stotterbremsbetätigung möglich ist.

Um Verschleiß am Bremsbelag der Bremsbacken 20 auszugleichen, besteht der Stempel 23 aus einem Stempelhals 33, der mit dem dritten Kniehebel 26 verbunden ist, und einem Stempelkörper 34, die über Sperrrasten 35 miteinander zusammenwirken, so daß der Stempelkörper 34 nur in Richtung zur Bremsklaue 19A hin relativ zum Stempelhals schrittweise bewegbar ist.

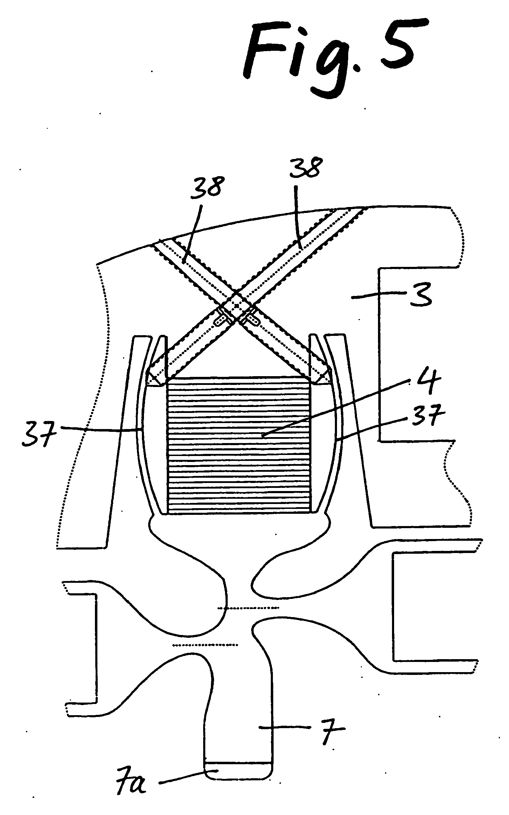

Da die Piezopakete zwar in hohem Maße druckbelastbar sind, andererseits aber Zugspannungsempfindlich sind, ist jedes Piezopaket durch zwei beiderseits des jeweiligen Piezopakets angeordnete, blattfederartig ausgebildete Arme 37 unter Druckvorspannung gesetzt, die am jeweiligen Piezopaketträger gebildet sind und als Zugfedern wirken. Dies ist in Fig. 5 dargestellt. Mit Hilfe von Druckschrauben 38 oder anderen, ähnlich wirkenden Elementen können diese Arme 37 einstellbar bauchig ausgebogen werden, wie in Figur 5 angedeutet ist, um sowohl die Druckvorspannung als auch die Federcharakteristik einstellen zu können.

Schließlich ist aus Figur 1 noch ersichtlich, daß an dem Piezomotor noch nach der einen Seite in Umfangsrichtung der Scheibe 1 wegragende Kühlbleche angeordnet sind, die zur Verbesserung der Kühlwirkung und zur Vergrößerung der Kühlfläche auch gewellt oder zickzackartig gefaltet sein können, und auf der anderen Seite des Piezomotors ebenfalls in Umfangsrichtung der Scheibe 1 weitere, als Träger für eine Steuerelektronik 40 dienende Kühlbleche wegragen.

## Patentansprüche

1. Elektrischer Universalantrieb,
mit einem umlaufenden oder linear beweglichen Abtriebsglied (1),
weiter mit mindestens zwei jeweils in einem eigenen Träger (3) angeordneten Sätzen von Aktoren, insbesondere Piezoaktoren (4, 5, 6), die jeweils auf einen sich auf dem Abtriebsteil (1) abstützenden Fuß (7) wirken,
wobei die mindestens zwei Sätze von Aktoren wechselweise den jeweils zugeordneten Fuß (7) an das Abtriebsteil (1) anpressen und jeweils im Sinne der Erzeugung einer hochfrequenten Schrittfolge in Richtung der Abtriebsbewegung des Abtriebsteils (1) auslenken,
wobei weiter die Träger (3) der Aktorensätze an einer bezüglich des Fußes (7) parallel zur Bewegungsrichtung des Abtriebsteils (1) nach einer Seite versetzten Stelle im halbsteifer Weise verbunden sind, und die Träger (3) jeweils durch ein Vorspannorgan (9) federelastisch gegen das Abtriebsteil (1) vorgespannt an einem Stator abgestützt sind,
**dadurch gekennzeichnet, daß**
zwischen dem Vorspannorgan (9) und dem jeweiligen Träger (3) ein die Vorspannkraft übertragender Kniehebelmechanismus (10) mit einem ersten Kniehebel (24) angeordnet ist, der an einer bezüglich des Fußes (7) parallel zur Bewegungsrichtung des Abtriebsteils (1) nach der bezüglich der Trägerverbindungsstelle anderen Seite versetzten Stelle am Träger (3) angreift,
der Kniehebelmechanismus einen zweiten Kniehebel (25) aufweist, der zwischen dem Vorspannorgan (9) und einem statorfesten Gegenlager (27) angeordnet ist,
dem Kniehebelmechanismus (10) ein Betätigungsaktor (28) zugeordnet ist, der über ein Kuppelglied (29) mit den Kniegelenken beider Kniehebel (24, 25) verbunden ist,
und die Anordnung des Kniehebelmechanimus (10) so getroffen ist, daß, wenn der erste Kniehebel (24) gestreckt ist, der zweite Kniehebel (25) eingeknickt ist, und umgekehrt, und der Betätigungsaktor (28) zum gemeinsamen Umschalten der beiden Kniehebel (24, 25) zwischen der Streckstellung und der Einknickstellung dient.

2. Universalantrieb nach Anspruch 1, **dadurch gekennzeichnet, daß**
dem Antrieb eine Reibungsbremse mit einem an das Abtriebsglied (1) anpressbaren Bremsbacke (19A, 20) zugeordnet ist,
und der Kniehebelmechanismus (10) einen dritten Kniehebel (26) aufweist, der zwischen dem Vorspannorgan (9) und der Bremsbacke (19A, 20) angeordnet ist, und dessen Kniegelenk ebenfalls mit dem Kuppelglied (29) des Betätigungsaktors (28) gekuppelt ist,
wobei die Anordnung so getroffen ist, daß, wenn der erste Kniehebel (24) gestreckt ist, der dritte Kniehebel eingeknickt ist, und umgekehrt, und daß die Geometrie des zweiten Kniehebels (25) und des dritten Kniehebels (26) so getroffen ist, daß der dritte Kniehebel (26) beim Bewegen in die Streckstellung eine größere Längung erfährt als der zweite Kniehebel (25).

3. Universalantrieb nach Anspruch 1 oder 2, **dadurch gekennzeichnet, daß** das Vorspannorgan durch eine Kragfederanordnung mit jeweils einer jedem Träger (3) zugeordneten Kragfeder (9) gebildet ist, die im Bereich der gegenseitigen Verbindung der Träger (3) statorfest festgelegt und unter Vorspannung gesetzt ist und auskragend bis zu dem Kniehebelmechanismus (10) verläuft.

4. Universalantrieb nach Anspruch 3, **dadurch gekennzeichnet, daß** die Kragfeder (9) mit ihrem vom Kniehebelmechanismus (10) entfernten Ende im Bereich der gegenseitigen Verbindung der Träger (3) einstückig mit dem jeweiligen Träger an dessen von dem Abtriebsglied (1) entgegengesetzt liegenden Bereich einstückig verbunden ist.

5. Universalantrieb nach Anspruch 3 oder 4, **dadurch gekennzeichnet, daß** die Kragfeder (9) an einer parallel zur Bewegungsrichtung des Abtriebsglieds (1) zwischen der Verbindungsstelle mit dem Träger oder mit dem Gehäuse und dem Fuß (7) gelegenen Stelle mittels eines Exzenters (17) in Richtung zum Abtriebsglied (1) hin unter Vorspannung gesetzt ist.

6. Universalantrieb nach einem der Ansprüche 1 bis 5, **dadurch gekennzeichnet, daß** der zweite Kniehebel (25) dreigliedrig ausgebildet ist und ein zweites, sich an einem statorfesten Anschlag (30) abstützendes Kniegelenk hat.

7. Universalantrieb nach einem der Ansprüche 2 bis 6, wobei der dritte Kniehebel (26) dreigliedrig ausgebildet ist und ein zweites, sich an einem statorfesten Anschlag (31) abstützendes Kniegelenk hat.

8. Universalantrieb nach Anspruch 6 oder 7, **dadurch gekennzeichnet, daß** das zwischen dem mit dem Kuppelglied (29) verbundenen Kniegelenk und dem zweiten Kniegelenk des zweiten Kniehebels (25) und/oder des dritten Kniehebels (26) verlaufende Kniehebelglied eine mit dem zugeordneten statorfesten Anschlag (30, 31) nach Art eines Keilgetriebes zusammenwirkende Schrägfläche (32) hat.

9. Universalantrieb nach einem der Ansprüche 2 bis 8, **dadurch gekennzeichnet, daß** der Stempel (23) zur Nachstellung eines Bremsbelagverschleißes an der Bremsbacke (19A, 20) aus einem Stempelhals (33) und einem Stempelkörper (34) besteht, die über Sperrrasten (35) so miteinander zusammenwirken, daß der Stempelkörper nur in Richtung zur Bremsbacke (19A, 20) relativ zum Stempelhals (33) schrittweise bewegbar ist.

10. Universalantrieb nach einem der Ansprüche 1 bis 9, wobei der Fuß (7) jedes Aktorsatzes an seinem mit dem Abtriebsglied (1) zusammenwirkenden Ende mit einem Hartmetallelement (36) versehen ist.

11. Universalantrieb nach einem der Ansprüche 1 bis 10, **dadurch gekennzeichnet, daß** die Träger (3) durch einen gehäusefesten Bolzen (8) miteinander verbunden sind, auf dem sie in Richtung zum Abtriebsglied (1) hin bzw. davon weg schwenkbar angeordnet sind, und daß die Träger (3) auf den Bolzen (8) reibschlüssig mit Hilfe von ringscheibenförmigen Piezoelementen (18) steuerbar miteinander verspannt sind.

12. Universalantrieb nach einem der Ansprüche 1 bis 11, **dadurch gekennzeichnet, daß** die Aktoren (4, 5, 6) Piezoaktoren sind und jeweils mit einem Kraftsensor ausgestattet sind, und daß die die Verspannung der Träger (3) steuernden Piezoelemente (18) von einem die Signale der Kraftsensoren der Piezoaktoren auswertenden Steuerelektronik ansteuerbar sind.

13. Universalantrieb nach einem der Ansprüche 1 bis 12, **dadurch gekennzeichnet, daß** das Abtriebsglied (1) scheiben- oder plattenförmig ist, und daß beiderseits des Abtriebsglieds jeweils eine Anordnung von jeweils mindestens zwei Aktorsätzen spiegelbildlich angeordnet ist,
wobei nur die auf einer Seite des Abtriebs (1) befindliche Anordnung von Aktorsätzen über einen zugehörigen Kniehebelmechanismus (10) vorgespannt wird, und die auf der anderen Seite des Abtreibsglieds (1) befindliche Anordnung von Aktorsätzen starr am Stator abgestützt ist.

14. Universalantrieb nach Anspruch 13, **dadurch gekennzeichnet, daß** zwei Bremsbacken (19A, 19B) spiegelbildlich beiderseits des Abtriebsglieds (1) angeordnet und miteinander gekuppelt sind, wobei nur die auf der einen Seite des Abtriebsglieds (1) befindliche Bremsbacke (19A, 20) durch einen Stempel (23) über den Kniehebelmechanismus (10) beaufschlagbar ist und die auf der anderen Seite des Abtriebsglieds angeordnete Bremsbacke (19B, 20) an einem statorfesten Widerlager (22) abgestützt ist.

15. Universalantrieb nach einem der Ansprüche 1 bis 14, **dadurch gekennzeichnet, daß** die als Piezoaktoren (4, 5, 6) ausgebildeten Aktoren jeweils durch beiderseits des jeweiligen Piezoaktors angeordnete, als Zugfedern wirkende blattfederartige Arme (37) des Trägers (3) unter Druckvorspannung gesetzt werden, und daß die Arme (37) mittels zugeordneter Druckschrauben (38) oder ähnlich wirkender Elemente einstellbar bauchig vorkrümmbar sind, um die Druckvorspannung und die Federcharakteristik einzustellen.

## Claims

1. Electric universal drive mechanism
having a revolving or linearly moveable output member (1),
further having at least two sets of actuators, in particular piezo actuators (4, 5, 6), each set arranged in a separate carrier (3), the actuators each acting on a base (7) supported on the output member (1),
wherein the at least two sets of actuators alternatingly press the respectively associated base (7) against the output member (1), and respectively deflect it in the direction of the output movement of the output member (1) in order to generate a high-frequency step sequence,
wherein further the carriers (3) of the sets of actuators are connected in a semirigid manner at a location laterally offset with respect to the base (7) and in parallel to the direction of movement of the output member (1), and the carriers (3) are respectively supported on a stator pre-stressed in a spring-elastic manner against the output member (1) by a pre-stressing member (9),
**characterised in that**
a toggle lever mechanism (10) transferring the pre-stressing force and having a first toggle lever (24) is arranged between the pre-stressing member (9) and the respective carrier (3), the toggle lever acting on a position on the carrier (3) relative to the base (7) parallel to the direction of movement of the output member (1) and offset to the other side relative to the connection point of the carrier,
that the toggle lever mechanism has a second toggle lever (25) that is arranged between the pre-stressing member (9) and a counter bearing (27) fixed to the stator,
that the toggle lever mechanism (10) is associated with an operating actuator (28) which is connected to the toggle joints of both toggle levers (24, 25) via a coupling element (29),
and that the arrangement of the toggle lever mechanism (10) is provided in such a way that the second toggle lever (25) is collapsed when the first toggle lever (24) is straightened, and vice versa, and that the operating actuator (28) serves to jointly switch the two toggle levers (24, 25) between the straightened position and the collapsed position.

2. Universal drive mechanism according to claim 1, **characterised in that**
the drive mechanism is associated with a friction brake having a brake shoe (19A, 20) that can be pressed against the output member (1),
and the toggle lever mechanism (10) has a third toggle lever (26) arranged between the pre-stressing member (9) and the brake shoe (19A, 20), and the toggle joint of which is also coupled to the coupling element (29) of the operating actuator (28),
wherein the arrangement is provided in such a way that the third toggle lever is collapsed when the first toggle lever (24) is straightened, and vice versa, and that the geometry of the second toggle lever (25) and of the third toggle lever (26) is configured in such a way that the third toggle lever (26) is lengthened to a larger extent than the second toggle lever (25) during movement into the extended position.

3. Universal drive mechanism according to claim 1 or 2, **characterised in that** the pre-stressing member is formed by a collar spring arrangement with a collar spring (9) respectively associated with each carrier (3), the collar spring being fixed to the stator in the area of the mutual connection of the carriers (3), set under prestress and extending up to the toggle lever mechanism (10) in a protruding manner.

4. Universal drive mechanism according to claim 3, **characterised in that** the collar spring (9) is integrally connected, with its end remote from the toggle lever mechanism (10) in the area of the mutual connection of the carriers (3), to the respective carrier on its area opposite to the output member (1).

5. The universal drive mechanism according to claim 3 or 4, **characterised in that** the collar spring (9) is pre-stressed in the direction towards the output member (1) by means of an eccentric (17), at a position located in parallel to the direction of movement of the output member (1) between the position of connection to the carrier or the housing and the base (7).

6. The universal drive mechanism according to any one of claims 1 to 5, **characterised in that** the second toggle lever (25) has a three-member configuration and presents a second toggle joint supported against a limit stop (30) that is fixed to the stator.

7. The universal drive mechanism according to any one of claims 2 to 6, wherein the third toggle lever (26) has a three-member configuration and presents a second toggle joint supported against a limit stop (31) that is fixed to the stator.

8. The universal drive mechanism according to claim 6 or 7, **characterised in that** the toggle lever element extending between the toggle joint connected to the coupling element (29) and the second toggle joint of the second toggle lever (25) and/or the third toggle lever (26) has a chamfer (32) co-operating, in the manner of wedge drive, with the associated limit stop (30, 31) fixed to the stator.

9. The universal drive mechanism according to any one of claims 2 to 8, **characterised in that** the plunger (23) for the readjustment of the brake lining wear on the brake shoes (19A, 20) consists of a plunger rod (33) and a plunger body (34) which co-operate by means of stop notches (35) in such a way that the plunger body can be moved stepwise, relative to the plunger rod (33), only in the direction towards the brake shoe (19A, 20).

10. The universal drive mechanism according to any one of claims 1 to 9, wherein the base (7) of each set of actuators is provided with a hard metal element (36) on its end co-operating with the output member (1).

11. The universal drive mechanism according to any one of claims 1 to 10, **characterised in that** the carriers (3) are connected to each other by means of a bolt (8) that is fixed to the housing and about which they can be pivoted in the direction towards the output member (1) or away from it, respectively, and that the carriers (3) are braced against each other on the bolts (8) by friction contact in a controllable manner by means of ringwheel-shaped piezo elements (18).

12. The universal drive mechanism according to any one of claims 1 to 11, **characterised in that** the actuators (4, 5, 6) are piezo actuators and are respectively provided with a force sensor, and that the piezo elements (18) controlling the bracing tension of the carriers (3) can be driven by control electronics that analyse the signals from the force sensors of the piezo actuators.

13. The universal drive mechanism according to any one of claims 1 to 12, **characterised in that** the output member (1) has a disc or plate shape, and that at both sides of the output member an arrangement of at least two sets of actuators is arranged in a mirror-inverted manner,
wherein only the arrangement of sets of actuators on the output (1) side is pre-stressed by means of an associated toggle lever mechanism (10), and the arrangement of sets of actuators on the other side of the output member (1) is rigidly supported on the stator.

14. The universal drive mechanism according to claim 13, **characterised in that** two brake shoes (19A, 19B) are arranged in a mirror-inverted manner on both sides of the output member (1) and are coupled to each other, wherein only the brake shoe (19A, 20) on one side of the output member (1) can be acted upon by a plunger (23) via the toggle lever mechanism (10), and the brake shoe (19B, 20) arranged on the other side of the output member is supported on a counter bearing (22) fixed to the stator.

15. The universal drive mechanism according to any one of claims 1 to 14, **characterised in that** the actuators configured as piezo actuators (4, 5, 6) respectively are pre-compressed by means of leaf spring type arms (37) of the carrier (3), the arms being arranged on both sides of the respective piezo actuators and acting as extension springs, and that the arms (37) can be pre-curved in a bulged shape by means of associated pressing screws (38) or elements with a similar function in order to adjust the pre-compression and the spring characteristic.

## Revendications

1. Commande électrique universelle
comprenant un organe de sortie périphérique ou mobile linéairement (1),
comprenant en outre au moins deux ensembles d'actionneurs disposés chacun dans un support propre (3), notamment d'actionneurs piézoélectriques (4, 5, 6) qui agissent chacun sur un pied (7) s'appuyant sur la partie de sortie (1),
dans laquelle les au moins deux ensembles d'actionneurs pressent alternativement le pied associé respectivement (7) contre la partie de sortie (1) et dévient à chaque fois en direction du mouvement de sortie de la partie de sortie (1) au sens de la génération d'une séquence progressive à haute fréquence,
dans laquelle les supports (3) des ensembles d'actionneurs sont en outre reliés de manière semi-rigide à un point décalé d'un côté par rapport au pied (7) parallèlement à la direction de mouvement de la partie de sortie (1), et les supports (3) sont appuyés sur un stator précontraints chacun par un organe de précontrainte (9) de manière élastique contre la partie de sortie (1),
**caractérisée en ce que**
un mécanisme de levier coudé (10) transmettant la force de précontrainte et présentant un premier levier coudé (24), qui est appliqué sur le support (3) en un point décalé de l'autre côté par rapport au point de connexion de support par rapport au pied (7) parallèlement à la direction de mouvement de la partie de sortie (1), est disposé entre l'organe de précontrainte (9) et le support respectif (3),
le mécanisme de levier coudé présente un deuxième levier coudé (25) qui est disposé entre l'organe de précontrainte (9) et un palier conjugué fixe dans le stator (27),
un actionneur d'actionnement (28) qui est relié par le biais d'un organe de raccordement (29) aux articulations des deux leviers coudés (24, 25) est associé au mécanisme de levier coudé (10),
et l'agencement du mécanisme de levier coudé (10) est affecté de telle sorte que, lorsque le premier levier coudé (24) est étiré, le deuxième levier coudé (25) est plié, et inversement, et l'actionneur d'actionnement (28) sert à la commutation commune des deux leviers coudés (24, 25) entre la position étirée et la position pliée.

2. Commande universelle selon la revendication 1, **caractérisée en ce que**
un frein à friction avec une mâchoire (19A, 20) pouvant presser contre l'organe de sortie (1) est associé à la commande,
et le mécanisme de levier coudé (10) présente un troisième levier coudé (26) qui est disposé entre l'organe de précontrainte (9) et la mâchoire (19A, 20) et dont l'articulation est également raccordée à l'organe de raccordement (29) de l'actionneur d'actionnement (28),
dans laquelle l'agencement est affecté de telle sorte que, lorsque le premier levier coudé (24) est étiré, le troisième levier coudé est plié, et inversement, et que la géométrie du deuxième levier coudé (25) et du troisième levier coudé (26) est affectée de telle sorte que le troisième levier coudé (26) subit un allongement supérieur au deuxième levier coudé (25) lors du déplacement dans la position étirée.

3. Commande universelle selon la revendication 1 ou 2, **caractérisée en ce que** l'organe de précontrainte est formé par un agencement de ressort en porte-à-faux avec à chaque fois un ressort en porte-à-faux (9) associé à chaque support (3) qui est fixé de manière fixe dans le stator dans la région de la connexion mutuelle des supports (3) et mis sous précontrainte et s'étend en saillie jusqu'au mécanisme de levier coudé (10).

4. Commande universelle selon la revendication 3, **caractérisée en ce que** le ressort en porte-à-faux (9) est relié d'une pièce au support respectif au niveau de sa région située à l'opposé de l'organe de sortie (1) avec son extrémité éloignée du mécanisme de levier coudé (10) dans la région de la connexion mutuelle des supports (3).

5. Commande universelle selon la revendication 3 ou 4, **caractérisée en ce que** le ressort en porte-à-faux (9) est mis sous précontrainte en un point situé parallèlement à la direction de mouvement de l'organe de sortie (1) entre le point de connexion au support ou au logement et le pied (7) au moyen d'un excentrique (17) en direction de l'organe de sortie (1).

6. Commande universelle selon l'une quelconque des revendications 1 à 5, **caractérisée en ce que** le deuxième levier coudé (25) est réalisé en trois membres et a une seconde articulation s'appuyant sur une butée fixe dans le stator (30).

7. Commande universelle selon l'une quelconque des revendications 2 à 6, dans laquelle le troisième levier coudé (26) est réalisé en trois membres et présente une seconde articulation s'appuyant sur une butée fixe dans le stator (31).

8. Commande universelle selon la revendication 6 ou 7, **caractérisée en ce que** le membre de levier coudé s'étendant entre l'articulation reliée à l'organe de raccordement (29) et la seconde articulation du deuxième levier coudé (25) et/ou du troisième levier coudé (26) présente une surface oblique (32) coopérant avec la butée associée fixe dans le stator (30, 31) à la manière d'un engrenage de clavette.

9. Commande universelle selon l'une quelconque des revendications 2 à 8, **caractérisée en ce que** le piston (23) pour le réglage d'une usure de la garniture de frein sur la mâchoire (19A, 20) se compose d'un col de piston (33) et d'un corps de piston (34) qui coopèrent ensemble par le biais de cliquets (35) de sorte que le corps de piston ne peut être déplacé progressivement qu'en direction de la mâchoire (19A, 20) par rapport au col de piston (33).

10. Commande universelle selon l'une quelconque des revendications 1 à 9, dans laquelle le pied (7) de chaque ensemble d'actionneurs est pourvu d'un élément métallique dur (36) à son extrémité coopérant avec l'organe de sortie (1).

11. Commande universelle selon l'une quelconque des revendications 1 à 10, **caractérisée en ce que** les supports (3) sont reliés entre eux par un boulon fixe dans le logement (8) sur lequel ils sont disposés à pivotement en direction de l'organe de sortie (1) ou en s'éloignant de celui-ci, et que les supports (3) sont serrés de manière à pouvoir être commandés entre eux sur le boulon (8), entraînés par friction à l'aide d'éléments piézoélectriques (18) en forme de disques annulaires.

12. Commande universelle selon l'une quelconque des revendications 1 à 11, **caractérisée en ce que** les actionneurs (4, 5, 6) sont des actionneurs piézoélectriques et sont chacun équipés d'un capteur de force, et que les éléments piézoélectriques (18) commandant le serrage des supports (3) peuvent être commandés par un système électronique de commande évaluant les signaux des capteurs de force des actionneurs piézoélectriques.

13. Commande universelle selon l'une quelconque des revendications 1 à 12, **caractérisée en ce que** l'organe de sortie (1) est en forme de disque ou de plaque, et qu'un agencement d'au moins deux ensembles d'actionneurs à chaque fois est disposé de manière réfléchie à chaque fois des deux côtés de l'organe de sortie,
dans laquelle seul l'agencement d'ensembles d'actionneurs se trouvant d'un côté de la sortie (1) est précontraint par le biais d'un mécanisme de levier coudé
associé (10) et l'agencement d'ensembles d'actionneurs se trouvant de l'autre côté de l'organe de sortie (1) est appuyé de manière fixe sur le stator.

14. Commande universelle selon la revendication 13, **caractérisée en ce que** deux mâchoires (19A, 19B) sont disposées de manière réfléchie des deux côtés de l'organe de sortie (1) et raccordées ensemble, dans laquelle seule la mâchoire (19A, 20) se trouvant d'un côté de l'organe de sortie (1) peut être sollicitée par un piston (23) par le biais du mécanisme de levier coudé (10) et la mâchoire (19B, 20) disposée de l'autre côté de l'organe de sortie est appuyée sur un contre-appui (22) fixe dans le stator.

15. Commande universelle selon l'une quelconque des revendications 1 à 14, **caractérisée en ce que** les actionneurs réalisés en tant qu'actionneurs piézoélectriques (4, 5, 6) sont mis en précontrainte de compression à chaque fois par des bras de type ressort à lames (37) du support (3) disposés des deux côtés de l'actionneur piézoélectrique respectif, agissant en tant que ressorts de traction, et que les bras (37) peuvent être courbés au préalable de manière bombée réglables au moyen de vis de serrage associées (38) ou d'éléments à action similaire pour régler la précontrainte de compression et la caractéristique de ressort.
